# EUROPÄISCHE PATENTANMELDUNG

(11) **EP 4 764 432 A1**
(43) Veröffentlichungstag der Anmeldung: **24.06.2026**
(21) Anmeldenummer: 25217996.5
(22) Anmeldetag: 24.11.2025
(51) Int. Cl.: G01J 3/02, G01J 3/28

(54) **VERFAHREN ZUR ÜBERPRÜFUNG EINER WELLENLÄNGENVERSCHIEBUNG AUF EINEM DETEKTOR IN EINEM SPEKTROMETER**

(30) Priorität: 18.12.2024 DE 102024138666
(71) Anmelder: Analytik Jena GmbH+Co. KG, 07745 Jena (DE)
(72) Erfinder: Weidauer, Thomas, 07743 Jena (DE); Münch, Stefan, 10711 Berlin (DE)
(74) Vertreter: Endress + Hauser Group Services (Deutschland) AG+Co. KG

(57) **Zusammenfassung**

Die Erfindung bezieht sich auf ein Verfahren zur Überprüfung einer Wellenlängenverschiebung auf einem Detektor (2) in einem Spektrometer (1), wobei das Spektrometer (1) eine Probeneinheit (3) und den Detektor (2) aufweist, wobei die Probeneinheit (3) dazu ausgestaltet ist, ein für eine Probe charakteristisches Licht zu erzeugen, wobei der Detektor (2) eine Vielzahl an Pixeln aufweist und dazu ausgestaltet ist, das erzeugte Licht als ein Spektrum zu detektieren, wobei das Verfahren zumindest die folgenden Schritte aufweist:
- Erstellen einer ersten Wellenlängenzuordnung, indem den Pixeln des Detektors (2) Wellenlängen zugeordnet werden,
- Aufnehmen eines ersten Spektrums einer Probe, für welches die erste Wellenlängenzuordnung gültig ist,
- Aufnehmen eines zweiten Spektrums der Probe,
- Ermitteln einer Wellenlängenverschiebung zwischen dem ersten Spektrum und dem zweiten Spektrum anhand eines Vergleichs des ersten Spektrums und des zweiten Spektrums,
- Erstellen einer zweiten Wellenlängenzuordnung, wobei den Pixeln im zweiten Spektrum anhand der ermittelten Wellenlängenverschiebung Wellenlängen zugeordnet werden.

## Beschreibung

Die Erfindung betrifft ein Verfahren zur Überprüfung einer Wellenlängenverschiebung auf einem Detektor in einem Spektrometer, wobei das Spektrometer eine Probeneinheit und den Detektor aufweist, wobei die Probeneinheit dazu ausgestaltet ist, ein für eine Probe charakteristisches Licht zu erzeugen, insbesondere eine Probe zur Emission eines Lichts anzuregen oder eine Probe mit einem Licht zu durchstrahlen, wobei der Detektor eine Vielzahl an Pixeln aufweist und dazu ausgestaltet ist, das erzeugte Licht als ein Spektrum zu detektieren.

In der Analytik dienen Spektrometer zur Analyse von Licht, welches von einer zu untersuchenden Probe, ggf. unter Anregung, ausgestrahlt wurde, oder durch die zu untersuchende Probe transmittiert wurde. Als Licht wird insbesondere elektromagnetische Strahlung bezeichnet. Das zu untersuchende Licht gelangt nach dem Passieren verschiedener optischer Komponenten, wie Linsen, Filter, Spiegel und/oder Gitter, schließlich auf einen Detektor, welcher das Licht in Form eines Spektrums detektiert.

Beispiele für Spektrometer sind Absorptions- und Emissions-Spektrometer. Bei Absorptionsspektrometern wird ein durch eine Probe transmittiertes Licht auf den Detektor abgebildet und u.a. die Extinktion der Probe bestimmt. Emissions-Spektrometer untersuchen das unter Anregung einer Probe emittierte Licht und weisen beispielsweise ein Echelle-Gitter auf, welche Beugungsgitter mit einer hohen Beugeeffizienz für hohe Beugungsordnungen sind. In Kombination mit einem zweiten dispersiven Element (Gitter oder Prisma) ermöglichen Echelle-Gitter die Erzeugung einer zweidimensionaler Beugungsordnungsstruktur. Dadurch wird eine besonders präzise Analyse der Probe ermöglicht.

Zur Wellenlängenzuordnung der Pixel des Detektors wird eine Referenzmessung durchgeführt. Beispielsweise wird eine Referenzlampe mit einer bekannten Wellenlänge auf den Detektor abgebildet. Anhand der Position des Lichts der Referenzlampe auf dem Detektor können dann die Pixel den Wellenlängen zugeordnet werden. Da sich die Position der Wellenlängen auf dem Detektor mit der Zeit aufgrund von thermischen Drifts und/oder von weiteren Ursachen wie Druckschwankungen im Spektrometer, oder Schwingungen in Motoren zur Bewegung von optischen Komponenten des Spektrometers verändern kann, wird die Referenzmessung regelmäßig wiederholt und beispielsweise vor jeder Probenmessung neu bestimmt. Dies erfordert jedoch zusätzliche Messungen zwischen den Probenmessungen.

Es ist daher Aufgabe der vorliegenden Erfindung, ein Verfahren bereitzustellen, welches eine einfache Überprüfung einer Wellenlängenverschiebung ermöglicht.

Die Aufgabe wird erfindungsgemäß gelöst durch gemäß Anspruch 1.

Erfindungsgemäß gelöst wird die Aufgabe durch ein Verfahren zur Überprüfung einer Wellenlängenverschiebung auf einem Detektor in einem Spektrometer, wobei das Spektrometer eine Probeneinheit und den Detektor aufweist, wobei die Probeneinheit dazu ausgestaltet ist, ein für eine Probe charakteristisches Licht zu erzeugen, insbesondere eine Probe zur Emission eines Lichts anzuregen oder eine Probe mit einem Licht zu durchstrahlen, wobei der Detektor eine Vielzahl an Pixeln aufweist und dazu ausgestaltet ist, das erzeugte Licht als ein Spektrum zu detektieren, wobei das Verfahren zumindest die folgenden Schritte aufweist:
- Erstellen einer ersten Wellenlängenzuordnung, indem den Pixeln des Detektors Wellenlängen zugeordnet werden,
- Aufnehmen eines ersten Spektrums einer Probe, für welches die erste Wellenlängenzuordnung gültig ist,
- Aufnehmen eines zweiten Spektrums der Probe,
- Ermitteln einer Wellenlängenverschiebung zwischen dem ersten Spektrum und dem zweiten Spektrum anhand eines Vergleichs des ersten Spektrums und des zweiten Spektrums,
- Erstellen einer zweiten Wellenlängenzuordnung, wobei den Pixeln im zweiten Spektrum anhand der ermittelten Wellenlängenverschiebung Wellenlängen zugeordnet werden.

Erfindungsgemäß wird eine erste Wellenlängenzuordnung bereitgestellt und für das erste Spektrum angewandt. Mittels des Vergleichs zwischen dem ersten Spektrum und dem zweiten Spektrum wird erreicht, dass eine Wellenlängenverschiebung zwischen den beiden Spektren ermittelt wird. Somit wird eine Referenzmessung zwischen dem ersten Spektrum und dem zweiten Spektrum eingespart und die Probe kann schneller spektral untersucht werden. Insbesondere ist der Detektor dazu ausgestaltet, die Intensität des erzeugten Lichts pro Pixel abzubilden. Das so gebildete Spektrum zeigt dann für jeden Pixel eine Intensität des Lichts an. Im Rahmen der Anmeldung ist mit Intensität stets eine Lichtintensität gemeint. Die Wellenlängenverschiebung kann horizontal, vertikal oder quer zum Detektor erfolgen. Daher kann die Wellenlängenverschiebung als ein 2D-Vektor bestimmt werden. Mittels des 2D-Vektors können die Wellenlängen relativ zu den Pixeln so verschoben werden, dass sie der zweiten Wellenlängenzuordnung entsprechen. Die Translationswerte im 2D-Vektor können dabei kleiner als die Pixelgröße sein. Das zweite Spektrum wird insbesondere nach dem ersten Spektrum aufgenommen. Ggf. kann zwischen dem ersten Spektrum und dem zweiten Spektrum kein Drift aufgetreten sein, so dass die Wellenlängenverschiebung gleich Null ist und die zweite Wellenlängenzuordnung der ersten Wellenlängenzuordnung entspricht.

Das erfindungsgemäße Verfahren ist insbesondere für Absorptions- und Emissionsspektrometer anwendbar. Besonders vorteilhaft ist das Verfahren für Echelle-Spektrometer, insbesondere für ein ICP-OES-Spektrometer (inductively coupled plasma optical emission spectroscopy), welche keine Thermostatierung aufweisen. Drifts wird in ICP-OES-Spektrometern häufig damit begegnet, dass das Spektrometer thermostatiert bzw. aufgeheizt oder gekühlt wird und so möglichst keine Wellenlängenverschiebung auftritt. Echelle-Spektrometer ohne eine solche Thermostatierung benötigen daher viele Referenzmessungen. Mittels des erfindungsgemäßen Verfahrens sind diese aber auf ein Minimum reduzierbar. Ebenso kann das erfindungsgemäße Verfahren vorteilhafterweise für ein Atomabsorptionsspektrometer eingesetzt werden.

In einer Ausgestaltung weist das Verfahren zumindest folgende Schritte auf:
- Aufnehmen eines ersten Spektrums einer Probe, welches eine Vielzahl an spektralen Strukturen, insbesondere Emissionsstrukturen, aufweist, wobei mindestens eine der spektralen Strukturen im ersten Spektrum als Prüfstruktur ausgewählt wird,
- Aufnehmen eines zweiten Spektrums der Probe und Ermitteln der Prüfstruktur im zweiten Spektrum,
- Ermitteln einer Wellenlängenverschiebung zwischen dem ersten Spektrum und dem zweiten Spektrum anhand eines Vergleichs der Prüfstrukturen des ersten Spektrums und des zweiten Spektrums,
- Erstellen einer zweiten Wellenlängenzuordnung, wobei den Pixeln im zweiten Spektrum anhand der ermittelten Wellenlängenverschiebung Wellenlängen zugeordnet werden.

Die spektralen Strukturen entsprechen insbesondere für die Probe charakteristische Wellenlängen. Die spektralen Strukturen sind insbesondere Emissionsstrukturen, wenn die Probeneinheit dazu ausgestaltet, eine Probe zur Emission eines Lichts anzuregen. Die Anregung der Probe kann beispielsweise mittels eines Plasmas erfolgen. Die Emissionsstrukturen weisen eine positive Intensität des Lichts auf und sind als helle Bereiche in dem jeweiligen Spektrum sichtbar.

Alternativ können die spektralen Strukturen Absorptionsstrukturen sein, wenn die Probeneinheit dazu ausgestaltet ist, eine Probe mit einem Licht zu durchstrahlen. Da die Absorptionsstrukturen sich durch eine Abschwächung des auf die Probe eingestrahlten Lichts auszeichnen, sind die Absorptionsstrukturen gegenüber dem restlichen Spektrum dunkler bzw. durch eine verringerte Intensität gekennzeichnet. Daher können ggf. das erste Spektrum und das zweite Spektrum vor dem Auswählen bzw. dem Ermitteln der Prüfstruktur zunächst in ein Extinktionsspektrum umgewandelt werden. Alternativ kann aus dem ersten Spektrum und dem zweiten Spektrum ein erstes Kehrspektrum und ein zweites Kehrspektrum gebildet werden, indem für alle Intensitäten des Spektrums der Kehrwert gebildet wird. Auf diese Weise erscheinen die ursprünglichen Absorptionsstrukturen als positive Strukturen in den Kehrspektren bzw. den Extinktionsspektren und ermöglichen eine vereinfachte Auswertung.

Werden mehr als zwei Spektren der Probe aufgenommen, so können zunächst alle Spektren aufgenommen werden, bevor eine Prüfstruktur ausgewählt wird. Damit kann sichergestellt werden, dass die ausgewählte Prüfstruktur in jedem Spektrum gut auswertbar ist.

Die ausgewählte Prüfstruktur kann eine für die Probe charakteristische spektrale Struktur sein und ist damit in jedem Spektrum der Probe zu finden. Es wird insbesondere angenommen, dass die Form der Prüfstruktur in jedem Spektrum gleichbleibt, sich zwischen dem ersten Spektrum und dem zweiten Spektrum also nicht ändert. Mit Form ist sowohl die geometrische Anordnung der Prüfstruktur auf den Pixeln als auch die Verteilung der Intensitäten über die Pixel der Prüfstruktur gemeint. Die Prüfstruktur ändert sich strukturell im Wesentlichen nicht, sondern ändert in Abhängigkeit der Wellenlängenverschiebung lediglich ihre Position im jeweiligen Spektrum. Lediglich aufgrund des diskreten Pixelrasters kann die detektierte Intensitätsverteilung zwischen den Spektren leicht abweichen. In der Regel ändert sich auch die Gesamtintensität, also die Summe der Intensitäten über die Pixel, der Prüfstruktur nicht. Dies gilt jedoch nicht für transiente spektrale Strukturen, welche beispielsweise bei der Messung von partikularen Proben auftreten und bei welchen die Intensität aufgrund von unregelmäßigen Konzentrationsverteilungen in der Probe etwas schwanken kann. Die im ersten Spektrum ausgewählte Prüfstruktur wird im zweiten Spektrum gesucht. Dabei kann eine erste Position der Prüfstruktur im ersten Spektrum und eine zweite Position der Prüfstruktur im zweiten Spektrum ermittelt werden. Durch den Vergleich der Prüfstrukturen im ersten Spektrum und im zweiten Spektrum wird auf eine Wellenlängenverschiebung geschlossen.

In einer Ausgestaltung wird eine spektrale Struktur als Prüfstruktur ausgewählt, welche eine vorgegebene Mindestfläche, ein vorgegebenes Mindest-Signal-Rausch-Verhältnis und/oder eine vorgegebene Mindestintensität aufweist. Für einen vereinfachten Vergleich der Prüfstrukturen im ersten Spektrum und im zweiten Spektrum können Bedingungen an die Auswahl der Prüfstruktur gestellt werden, wie dass die Prüfstruktur eine vorgegebene Mindestfläche aufweisen soll, also sich beispielsweise über eine vorgegebene Anzahl an Pixeln erstreckt. Ferner kann eine Bedingung sein, dass die Prüfstruktur ein vorgegebenes Mindest-Signal-Rausch-Verhältnis aufweist, also das Verhältnis von Signal zu Rauschen einen Mindestwert aufweist. Eine weitere Bedingung kann sein, dass die Prüfstruktur eine vorgegebene Mindestintensität aufweist, dass also die Summe der Intensitäten des Lichts über alle Pixel, über die sich die Prüfstruktur erstreckt, gebildet wird und diese Summe über der vorgegebenen Mindestintensität liegt.

In einer Ausgestaltung erfolgt der Vergleich der Prüfstrukturen im ersten Spektrum und im zweiten Spektrum anhand einer Bestimmung der Intensitätsschwerpunkte der Prüfstrukturen. Als Intensitätsschwerpunkt wird ein Schwerpunkt der Prüfstruktur bezeichnet, der jedoch nicht anhand einer Massenverteilung bestimmt wird, sondern in ähnlicher Weise anhand der Verteilung der Intensitäten des Lichts über die Pixel. Dafür können typische Verfahren zum Bestimmen von Masseschwerpunkte verwendet werden, wobei die Masse durch die Intensität des Lichts und die Position durch die Pixel ersetzt wird. Beispielsweise werden die Pixel, über die sich die Prüfstruktur erstreckt, jeweils mit einer dem jeweiligen Pixel zugeordneten Intensität gewichtet. Dabei können die Pixel in eine Vielzahl von Teilpixeln zerlegt werden, welche jeweils mit einer ihnen zugeordneten Intensität gewichtet werden. Anhand der solchermaßen erstellten Intensitätsverteilung kann dann der Intensitätsschwerpunkt bestimmt werden. Insbesondere mittels dieser Ausgestaltung werden für die Wellenlängenverschiebung Translationswerte erhalten, welche kleiner als die Pixelgröße sein können.

In einer Ausgestaltung entspricht die Wellenlängenverschiebung der Differenz, insbesondere eines Differenzvektors, der Intensitätsschwerpunkte der Prüfstrukturen im ersten Spektrum und im zweiten Spektrum. Da die Prüfstruktur in beiden Spektren strukturell identisch ist und lediglich ihre Position in den Spektren in Abhängigkeit der Wellenlängenverschiebung ändert, kann diese anhand der Differenz der Intensitätsschwerpunkte der Prüfstrukturen im ersten Spektrum und im zweiten Spektrum ermittelt werden.

In einer Ausgestaltung erfolgt der Vergleich der Prüfstrukturen im ersten Spektrum und im zweiten Spektrum anhand einer Anpassung der Prüfstrukturen an eine Funktion zweiter Ordnung oder höher. Die Funktion kann eine Gauß- oder eine Lorentz-Funktion sein. Die Prüfstruktur kann wie auf dem Detektor zweidimensional abgebildet mit der Funktion angefittet werden. Alternativ können die der Prüfstruktur zugehörigen Pixel in einer Achse des Detektors gebinnt, also addiert, werden und in dieser eindimensionalen Darstellung angefittet werden. Der Erwartungswert der Gauß-Funktion bzw. das Maximum der Lorentz-Funktion entspricht dann dem Intensitätsschwerpunkt der Prüfstruktur. Dabei wird angenommen, dass die Intensitätsverteilung der Prüfstruktur symmetrisch ist. Durch Vergleich der Erwartungswerte bzw. der Maxima der Prüfstrukturen im ersten Spektrum und im zweiten Spektrum kann die Wellenlängenverschiebung ermittelt werden.

In einer Ausgestaltung erfolgt der Vergleich der Prüfstrukturen im ersten Spektrum und im zweiten Spektrum anhand einer Kante der Prüfstruktur. Die Kanten der Prüfstruktur entsprechen einem Übergang von einem Hintergrundsignal zu einer Intensität der Prüfstruktur und sind durch eine starke Steigung der Intensität gekennzeichnet, wodurch sie sich gut lokalisieren lassen. Durch Auswahl einer Kante und des Vergleichs der Position der Kante im ersten Spektrum und im zweiten Spektrum kann die Wellenlängenverschiebung ermittelt werden.

In einer Ausgestaltung wird die Prüfstruktur im zweiten Spektrum anhand einer ersten Position der Prüfstruktur im ersten Spektrum ermittelt. Zum Auffinden der ausgewählten Prüfstruktur im zweiten Spektrum bietet es sich an, eine erste Position der Prüfstruktur im ersten Spektrum zu ermitteln und ausgehend von der ersten Position die Prüfstruktur im zweiten Spektrum zu suchen. Die erste Position der Prüfstruktur wird sich aufgrund der Wellenlängenverschiebung zwischen dem ersten Spektrum und dem zweiten Spektrum von einer zweiten Position der Prüfstruktur im zweiten Spektrum unterscheiden. Es wird in der Regel erwartet, dass die Prüfstruktur im zweiten Spektrum sich in der Umgebung der ersten Position befindet.

In einer Ausgestaltung umfasst das Ermitteln der Prüfstruktur im zweiten Spektrum folgende Schritte:
- Bestimmen einer ersten Position der Prüfstruktur im ersten Spektrum,
- Ermitteln einer spektralen Struktur im zweiten Spektrum in einem vorgegebenen Bereich um die erste Position,
- Vergleichen einer Form der Prüfstruktur im ersten Spektrum mit einer Form der ermittelten spektralen Struktur im zweiten Spektrum,
   ∘ Wenn eine Abweichung der beiden Formen innerhalb eines Toleranzbereichs liegt, Feststellen, dass die ermittelte spektrale Struktur der Prüfstruktur entspricht,
   ∘ Wenn die Abweichung der beiden Formen außerhalb des Toleranzbereichs liegt, Abbrechen des Verfahrens.

Die Prüfstruktur kann im zweiten Spektrum ausgehend von einer ersten Position der Prüfstruktur im ersten Spektrum ermittelt werden. Dabei wird erwartet, dass eine zweite Position der Prüfstruktur im zweiten Spektrum innerhalb eines vorgegebenen Bereichs um die erste Position der Prüfstruktur zu finden ist. Läge die zweite Position der Prüfstruktur außerhalb des vorgegebenen Bereichs, wäre eine erhebliche Wellenlängenverschiebung aufgetreten, die dann nicht mehr durch den Vergleich zwischen dem ersten Spektrum und dem zweiten Spektrum, sondern durch eine neue erste Wellenlängenzuordnung, beispielsweise durch eine neue Referenzmessung, ermittelt wird. Die Referenzmessung soll idealerweise eine höhere Genauigkeit der Wellenlängenzuordnung ermöglichen. Wird also keine spektrale Struktur in dem vorgegebenen Bereich um die erste Position gefunden, so wird das Verfahren an dieser Stelle abgebrochen.

Kann eine spektrale Struktur in dem vorgegebenen Bereich um die erste Position ermittelt werden, so wird anschließend die Form der Prüfstruktur im ersten Spektrum mit einer Form der ermittelten spektralen Struktur verglichen. Da davon ausgegangen wird, dass die Form der Prüfstruktur im Wesentlichen gleichbleibt, kann festgestellt werden, dass die ermittelte spektrale Struktur der Prüfstruktur entspricht, wenn eine Abweichung der Form der ermittelten spektralen Struktur von der Form der Prüfstruktur im ersten Spektrum innerhalb eines Toleranzbereichs liegt. Liegt die Abweichung zwischen den beiden Formen außerhalb eines Toleranzbereichs, ist die ermittelte spektrale Struktur nicht die Prüfstruktur des ersten Spektrums und das Verfahren wird abgebrochen.

In einer Ausgestaltung werden mehrere spektrale Strukturen im ersten Spektrum als Prüfstrukturen ausgewählt und die Prüfstrukturen im zweiten Spektrum ermittelt, wobei die Wellenlängenverschiebung zwischen dem ersten Spektrum und dem zweiten Spektrum anhand eines Vergleichs der Prüfstrukturen des ersten Spektrums und des zweiten Spektrums ermittelt wird. Indem mehrere Prüfstrukturen im ersten Spektrum ausgewählt und die Wellenlängenverschiebung anhand der mehreren Prüfstrukturen ermittelt wird, wird die Wellenlängenverschiebung mit einer höheren Genauigkeit bestimmt. Beispielsweise kann für jede Prüfstruktur eine Wellenlängenverschiebung ermittelt und dann ein Mittelwert aus den jeweiligen Wellenlängenverschiebungen berechnet werden, welcher Mittelwert dann als Wellenlängenverschiebung zwischen dem ersten Spektrum und dem zweiten Spektrum verwendet wird. Ggf. auftretende Ausreißer können dabei außer Acht gelassen werden. Optional können die Prüfstrukturen und den ihnen zugeordneten Wellenlängenverschiebungen eine Gewichtung erfahren, z.B. anhand eines Signal-to-Noise-Ratios der Prüfstrukturen, welche dann in die Mittelwertbildung einfließt.

In einer Ausgestaltung wird das erste Spektrum in mehrere Teilbereiche aufgeteilt und in mehreren Teilbereichen eine spektrale Struktur als Prüfstruktur ausgewählt. Indem aus verschiedenen Teilbereichen des ersten Spektrums jeweils eine Prüfstruktur ausgewählt wird und anhand eines Vergleichs der Prüfstrukturen die Wellenlängenverschiebung ermittelt wird, wird eine höhere Genauigkeit der ermittelten Wellenlängenverschiebung erreicht.

In einer Ausgestaltung erfolgt der Vergleich des ersten Spektrums und des zweiten Spektrums anhand einer Autokorrelation der beiden Spektren. Der Begriff der Autokorrelation stammt aus der Stochastik und der Signalverarbeitung und beschreibt typischerweise die Korrelation einer Funktion oder eines Signals mit sich selbst zu einem anderen Zeitpunkt. In der vorliegenden Erfindung werden Autokorrelationsfunktionen genutzt, um das erste Spektrum mit dem zweiten Spektrum zu vergleichen, wobei das erste Spektrum als ein früherer Zeitpunkt des zweiten Spektrums betrachtet werden kann. Mittels der Autokorrelation wird geprüft, inwieweit das erste Spektrum und das zweite Spektrum identisch bzw. unterschiedlich sind. Auf diese Weise kann die Wellenlängenverschiebung zwischen dem ersten Spektrum und dem zweiten Spektrum ermittelt werden.

In einer Ausgestaltung wird im ersten Spektrum und im zweiten Spektrum jeweils ein Teilbereich ausgewählt, wobei der Vergleich des ersten Spektrums und des zweiten Spektrums anhand einer Autokorrelation der beiden Teilbereiche des ersten Spektrums und des zweiten Spektrums erfolgt. Die Teilbereiche des ersten Spektrums und des zweiten Spektrums umfassen denselben Bereich des jeweiligen Spektrums. Indem nur ein Teilbereich der Spektren anstellte der gesamten Spektren verglichen wird, kann die Wellenlängenverschiebung in kürzerer Zeit ermittelt werden.

In einer Ausgestaltung umfasst das Verfahren die weiteren Schritte:
- Aufnehmen eines dritten Spektrums,
- Ermitteln einer Wellenlängenverschiebung zwischen dem ersten Spektrum und dem dritten Spektrum anhand eines Vergleichs des ersten Spektrums und des dritten Spektrums, oder Ermitteln einer Wellenlängenverschiebung zwischen dem zweiten Spektrum und dem dritten Spektrum anhand eines Vergleichs des zweiten Spektrums und des dritten Spektrums,
- Erstellen einer dritten Wellenlängenzuordnung, wobei den Pixeln im dritten Spektrum anhand der ermittelten Wellenlängenverschiebung zwischen dem zweiten Spektrum und dem dritten Spektrum oder anhand der ermittelten Wellenlängenverschiebung zwischen dem ersten Spektrum und dem dritten Spektrum Wellenlängen zugeordnet werden.

Häufig werden nicht nur ein erstes und ein zweites Spektrum der Probe aufgenommen, sondern noch weitere, wie ein drittes, viertes oder fünftes Spektrum. Wird ein weiteres Spektrum, beispielsweise ein drittes Spektrum, aufgenommen, so kann die Wellenlängenverschiebung auch für das dritte Spektrum bzw. das weitere Spektrum ermittelt werden. Dies kann einerseits anhand eines Vergleichs des vorher aufgenommenen Spektrums, beispielsweise des zweiten Spektrums, mit dem aktuellen Spektrum, bspw. dem dritten Spektrum, geschehen. Alternativ ist es auch möglich, die Wellenlängenverschiebung anhand eines Vergleichs eines früheren Spektrums, bspw. des ersten Spektrums, und des aktuellen Spektrums, bspw. des dritten Spektrums, zu ermitteln. Das dritte Spektrum wird insbesondere nach dem ersten Spektrum und nach dem zweiten Spektrum aufgenommen.

In einer Ausgestaltung umfasst das Verfahren die weiteren Schritte:
- Aufnehmen eines dritten Spektrums,
- Ermitteln einer Wellenlängenverschiebung zwischen dem zweiten Spektrum und dem dritten Spektrum anhand einer Extrapolation der Wellenlängenverschiebung zwischen dem ersten Spektrum und dem zweiten Spektrum,
- Erstellen einer dritten Wellenlängenzuordnung, wobei den Pixeln im dritten Spektrum anhand der ermittelten Wellenlängenverschiebung zwischen dem zweiten Spektrum und dem dritten Spektrum Wellenlängen zugeordnet werden.

In dieser Ausgestaltung wird die Wellenlängenverschiebung zwischen dem ersten Spektrum und dem zweiten Spektrum extrapoliert, um die Wellenlängenverschiebung zwischen dem zweiten Spektrum und dem dritten Spektrum zu ermitteln. Dabei können die erste und die zweite Wellenlängenzuordnung verwendet werden. Dies ermöglicht eine schnelle Erstellung der dritten Wellenlängenzuordnung. Das dritte Spektrum wird insbesondere nach dem ersten Spektrum und nach dem zweiten Spektrum aufgenommen.

In einer Ausgestaltung umfasst das Verfahren die weiteren Schritte:
- Erstellen einer ersten Wellenlängenzuordnung, indem den Pixeln des Detektors Wellenlängen zugeordnet werden,
- Aufnehmen eines ersten Spektrums einer Probe, für welches die erste Wellenlängenzuordnung gültig ist,
- Aufnehmen eines zweiten Spektrums der Probe,
- Aufnehmen eines dritten Spektrums, wobei das dritte Spektrum nach dem ersten Spektrum und vor dem zweiten Spektrum aufgenommen wird,
- Ermitteln einer Wellenlängenverschiebung zwischen dem ersten Spektrum und dem zweiten Spektrum anhand eines Vergleichs des ersten Spektrums und des zweiten Spektrums,
- Erstellen einer zweiten Wellenlängenzuordnung, wobei den Pixeln im zweiten Spektrum anhand der ermittelten Wellenlängenverschiebung zwischen dem ersten Spektrum und dem zweiten Spektrum Wellenlängen zugeordnet werden,
- Ermitteln einer Wellenlängenverschiebung zwischen dem ersten Spektrum und dem dritten Spektrum anhand einer Interpolation der Wellenlängenverschiebung zwischen dem ersten Spektrum und dem zweiten Spektrum,
- Erstellen einer dritten Wellenlängenzuordnung, wobei den Pixeln im dritten Spektrum anhand der ermittelten Wellenlängenverschiebung zwischen dem ersten Spektrum und dem dritten Spektrum Wellenlängen zugeordnet werden.

Ist die Wellenlängenverschiebung zwischen zwei Spektren, hier dem ersten und dem zweiten Spektrum, bekannt, so kann diese vorteilhafterweise zum Interpolieren einer Wellenlängenverschiebung für ein Spektrum eingesetzt werden, welches zwischen den beiden Spektren, hier das dritte Spektrum, aufgenommen wurde. Dies ermöglicht eine schnelle Erstellung der dritten Wellenlängenzuordnung.

In einer Ausgestaltung wird ein Referenzspektrum aufgenommen, wobei anhand des Referenzspektrums die erste Wellenlängenzuordnung erstellt wird. Das Referenzspektrum kann ohne Probe und mit mindestens einer Referenzlichtquelle mit einer definierten Wellenlänge aufgenommen werden. Anhand der mindestens einen definierten Wellenlänge der mindestens einen Referenzlichtquelle und des Referenzspektrum kann eine Zuordnung der Wellenlängen zu den Pixeln erfolgen. Alternativ können auch andere definierte spektrale Strukturen zur ersten Wellenlängenzuordnung genutzt werden. Beispielsweise kann ein Filter in einem Strahlgang des erzeugten Lichts zwischen Probeneinheit und Detektor eingesetzt werden, welcher nur definierte Wellenlängen passieren lässt. Anhand eines Referenzspektrums mit dem Filter kann erkannt werden, welche Wellenlängen den Filter passiert haben und auf den Detektor abgebildet wurden, so dass eine Wellenlängenzuordnung möglich ist. Das Referenzspektrum kann ebenfalls ein Spektrum der Probe sein, in dem beispielsweise zusätzliche definierte spektrale Strukturen von einer Referenzlichtquelle oder einem Filter hinzugefügt werden. Es ist auch möglich, anhand von spektralen Strukturen der Probe eine erste Wellenlängenzuordnung zu erstellen, insbesondere wenn die Komponenten der Probe zumindest teilweise bekannt sind oder mittels einer Mustererkennung, welche aus dem Spektrum ein Muster erstellt und mit einem Katalog an Mustern vergleicht, um dem Muster die Komponenten der Probe zu erkennen und anhand der Komponenten, denen definierte Wellenlängen zugeordnet sind, eine Wellenlängenzuordnung zu erstellen.

Im Weiteren soll anhand der nachfolgenden Figuren Fig. 1-3 die vorliegende Erfindung näher erläutert werden. Sie zeigen:
Fig. 1: eine schematische Darstellung eines Spektrometers.
Fig. 2: ein beispielhaftes erstes Spektrum.
Fig. 3: eine Darstellung einer Wellenlängenverschiebung einer Prüfstruktur.

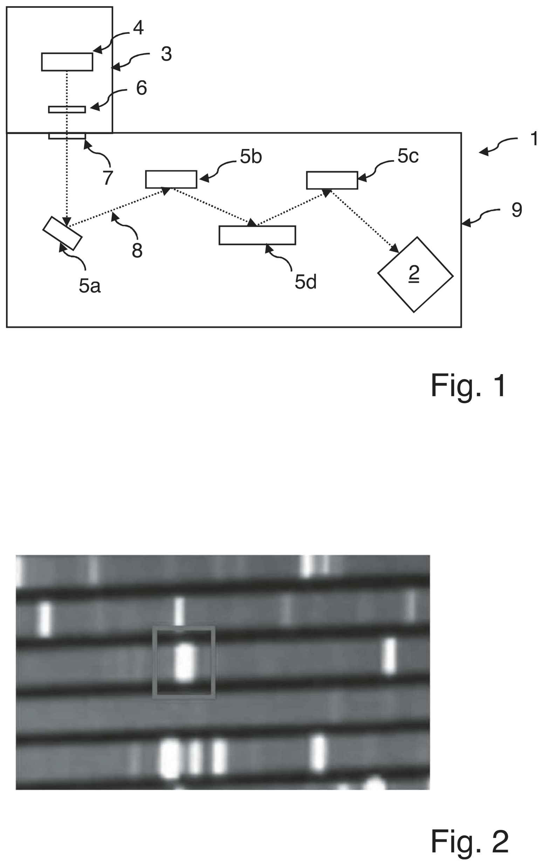

In Fig. 1 ist eine schematische Darstellung des erfindungsgemäßen Spektrometers 1 gezeigt. Das Spektrometer 1 umfasst eine Probeneinheit 3 und einen Detektor 2. Optional kann das Spektrometer 1 mehrere optische Komponenten 5 aufweisen. Die optischen Komponenten 5 sind derart angeordnet und ausgestaltet, dass sie den Strahlengang 8 des erzeugten Lichts von der Probeneinheit 3 zum Detektor 2 führen. Der Detektor 2 ist dazu ausgestaltet, das erzeugte Licht in Form eines Spektrums zu detektieren. Die Probeneinheit 3 kann eine Lichtquelle 4 aufweisen, welche die Probe zur Emission von Licht anregt oder die Probe durchstrahlt. Die Lichtquelle 4 kann insbesondere ein Plasma sein. Die Probeneinheit 3 kann dazu ausgestaltet sein, das erzeugte Licht zu bündeln und in einen Hauptbereich 9 des Spektrometers zu führen. Die Probeneinheit 3 kann weitere optische Komponenten aufweisen, wie bspw. eine Aperturblende 6, eine Eingangsöffnung oder Spiegel oder Linsen, welche der Übersichtlichkeit halber nicht gezeigt sind. Das Spektrometer 4 kann einen Spalt 7 aufweisen. Der Spalt 7 kann zwischen der Probeneinheit 3 und dem Hauptbereich 9 angeordnet sein. Die Aperturblende 6 kann benachbart zum Spalt 7 angeordnet sein. Die optischen Komponenten 5a,5b,5c können Spiegel sein. Die optische Komponente 5d ist beispielhaft als Echelle-Gitter ausgestaltet. Weitere optische Komponenten können Filter, Prismen und/oder Linsen sein. Das Spektrometer 1 kann ein ICP-OES-Gerät oder ein Atomabsorptionsspektrometer sein.

In Fig. 2 ist ein beispielhaftes erstes Spektrum dargestellt. Im ersten Spektrum sind eine Vielzahl an spektralen Strukturen vorhanden. Das erste Spektrum ist in diesem Beispiel ein Ausschnitt eines mit einem ICP-OES-Spektrometer aufgenommenes Echellogramms. Der Ausschnitt wurde gewählt, um die spektralen Strukturen besser erkennbar zu machen. Insbesondere sind die spektralen Strukturen Emissionsstrukturen, welche als helle Bereiche vor einem dunkleren Plasmahintergrund sichtbar sind. Die Position dieser Emissionsstrukturen auf dem Detektor kann sich aufgrund thermischen oder sonstigen Drifts mit der Zeit ändern. Daher ist es für eine präzise Auswertung des Spektrums notwendig, stets für eine korrekte Wellenlängenzuordnung im Spektrum zu sorgen.

Daher wird im erfindungsgemäßen Verfahren zunächst eine erste Wellenlängenzuordnung erstellt, beispielsweise mittels eines Referenzspektrums. Anschließend kann ein erstes Spektrum und ein zweites Spektrum aufgenommen werden und anhand eines Vergleichs der beiden Spektren eine Wellenlängenverschiebung ermittelt werden. Dabei gilt die erste Wellenlängenzuordnung für das erste Spektrum, das beispielsweise kurz nach dem Referenzspektrum bzw. der ersten Wellenlängenzuordnung aufgenommen wird. Aufgrund von thermischen oder sonstigen Drifts ist die erste Wellenlängenzuordnung für das zweite Spektrum nicht unbedingt gültig und es kann eine Wellenlängenverschiebung zwischen dem ersten Spektrum und dem zweiten Spektrum aufgetreten sein, welche zu ermitteln ist.

Eine der spektralen Strukturen im ersten Spektrum, welche in Fig. 2 durch einen Rahmen hervorgehoben ist, kann als Prüfstruktur ausgewählt werden. Diese Prüfstruktur wird anschließend im zweiten Spektrum ermittelt. Anhand eines Vergleichs der Prüfstrukturen im ersten Spektrum und im zweiten Spektrum kann die Wellenlängenverschiebung zwischen dem ersten Spektrum und dem zweiten Spektrum ermittelt werden.

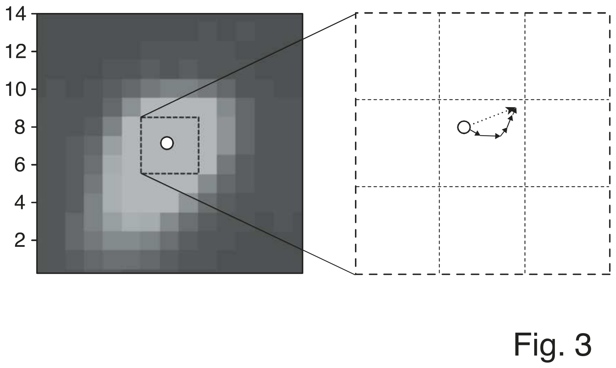

In Fig. 3 ist auf der linken Seite eine Prüfstruktur im Detail dargestellt. Es wird deutlich, dass die Prüfstruktur näher zu ihrem Zentrum höhere Intensitäten und am Rand der Prüfstruktur geringere Intensitäten aufweist, d.h. dass die Prüfstruktur eine Intensitätsverteilung aufweist. Der Kreis, welcher annähernd mittig in dem Bild eingefügt ist, markiert den Schwerpunkt der Intensitätsverteilung der Prüfstruktur. Auf der rechten Seite von Fig. 3 ist dargestellt, wie der Intensitätsschwerpunkt der Prüfstruktur sich mit der Zeit ändert. So weist die Prüfstruktur im ersten Spektrum einen Intensitätsschwerpunkt auf, welcher wieder durch einen Kreis dargestellt ist. Durch thermischen oder anderen Drift wandert der Intensitätsschwerpunkt der Prüfstruktur zunächst nach rechts und dann vermehrt nach oben in der Darstellung, wie durch die Pfeile angedeutet. Jeder Pfeil markiert dabei den Intensitätsschwerpunkt der Prüfstruktur im nachfolgend aufgenommen Spektrum. Der gestrichelte Pfeil markiert die gesamte Verschiebung der Wellenlänge über die Zeit. Mithilfe der Auswertung der Intensitätsschwerpunkt der Prüfstruktur kann eine Wellenlängenverschiebung ermittelt werden, die kleiner als die Pixelgröße ist. Auch dies ist im rechten Teil von Fig. 3 zu erkennen, in welcher 3x3 Pixel dargestellt sind. Die Veränderung des Intensitätsschwerpunkts der Prüfstruktur bewegt sich dabei innerhalb eines Pixels.

### Bezugszeichenliste

- 1: Spektrometer
- 2: Detektor
- 3: Probeneinheit
- 4: Lichtquelle
- 5: optische Komponenten
- 6: Aperturblende
- 7: Spalt
- 8: Strahlengang
- 9: Hauptbereich

## Patentansprüche

1. Verfahren zur Überprüfung einer Wellenlängenverschiebung auf einem Detektor (2) in einem Spektrometer (1), wobei das Spektrometer (1) eine Probeneinheit (3) und den Detektor (2) aufweist, wobei die Probeneinheit (3) dazu ausgestaltet ist, ein für eine Probe charakteristisches Licht zu erzeugen, insbesondere eine Probe zur Emission eines Lichts anzuregen oder eine Probe mit einem Licht zu durchstrahlen, wobei der Detektor (2) eine Vielzahl an Pixeln aufweist und dazu ausgestaltet ist, das erzeugte Licht als ein Spektrum zu detektieren, wobei das Verfahren zumindest die folgenden Schritte aufweist:
- Erstellen einer ersten Wellenlängenzuordnung, indem den Pixeln des Detektors (2) Wellenlängen zugeordnet werden,
- Aufnehmen eines ersten Spektrums einer Probe, für welches die erste Wellenlängenzuordnung gültig ist,
- Aufnehmen eines zweiten Spektrums der Probe,
- Ermitteln einer Wellenlängenverschiebung zwischen dem ersten Spektrum und dem zweiten Spektrum anhand eines Vergleichs des ersten Spektrums und des zweiten Spektrums,
- Erstellen einer zweiten Wellenlängenzuordnung, wobei den Pixeln im zweiten Spektrum anhand der ermittelten Wellenlängenverschiebung Wellenlängen zugeordnet werden.

2. Verfahren nach Anspruch 1,
wobei das Verfahren zumindest folgende Schritte aufweist:
- Aufnehmen eines ersten Spektrums einer Probe, welches eine Vielzahl an spektralen Strukturen, insbesondere Emissionsstrukturen, aufweist, wobei mindestens eine der spektralen Strukturen im ersten Spektrum als Prüfstruktur ausgewählt wird,
- Aufnehmen eines zweiten Spektrums der Probe und Ermitteln der Prüfstruktur im zweiten Spektrum,
- Ermitteln einer Wellenlängenverschiebung zwischen dem ersten Spektrum und dem zweiten Spektrum anhand eines Vergleichs der Prüfstrukturen des ersten Spektrums und des zweiten Spektrums,
- Erstellen einer zweiten Wellenlängenzuordnung, wobei den Pixeln im zweiten Spektrum anhand der ermittelten Wellenlängenverschiebung Wellenlängen zugeordnet werden.

3. Verfahren nach Anspruch 2,
wobei eine spektrale Struktur als Prüfstruktur ausgewählt wird, welche eine vorgegebene Mindestfläche, ein Mindest-Signal-Rausch-Verhältnis und/oder eine vorgegebene Mindestintensität aufweist.

4. Verfahren nach einem der Ansprüche 2-3,
wobei der Vergleich der Prüfstrukturen im ersten Spektrum und im zweiten Spektrum anhand einer Bestimmung der Intensitätsschwerpunkte der Prüfstrukturen erfolgt.

5. Verfahren nach Anspruch 4,
wobei die Wellenlängenverschiebung der Differenz der Intensitätsschwerpunkte der Prüfstrukturen im ersten Spektrum und im zweiten Spektrum entspricht.

6. Verfahren nach einem der Ansprüche 2-3,
wobei der Vergleich der Prüfstrukturen im ersten Spektrum und im zweiten Spektrum anhand einer Kante der Prüfstruktur erfolgt.

7. Verfahren nach einem der Ansprüche 2-3,
wobei der Vergleich der Prüfstrukturen im ersten Spektrum und im zweiten Spektrum anhand einer Anpassung der Prüfstrukturen an eine Funktion zweiter Ordnung oder höher erfolgt.

8. Verfahren nach einem der Ansprüche 2-7,
wobei die Prüfstruktur im zweiten Spektrum anhand einer ersten Position der Prüfstruktur im ersten Spektrum ermittelt wird.

9. Verfahren nach einem der Ansprüche 2-8,
wobei das Ermitteln der Prüfstruktur im zweiten Spektrum folgende Schritte umfasst:
- Bestimmen einer ersten Position der Prüfstruktur im ersten Spektrum,
- Ermitteln einer spektralen Struktur im zweiten Spektrum in einem vorgegebenen Bereich um die erste Position,
- Vergleichen einer Form der Prüfstruktur im ersten Spektrum mit einer Form der ermittelten spektralen Struktur im zweiten Spektrum,
∘ Wenn eine Abweichung der beiden Formen innerhalb eines Toleranzbereichs liegt, Feststellen, dass die ermittelte spektrale Struktur der Prüfstruktur entspricht,
∘ Wenn die Abweichung der beiden Formen außerhalb des Toleranzbereichs liegt, Abbrechen des Verfahrens.

10. Verfahren nach einem der Ansprüche 2-9,
wobei mehrere spektrale Strukturen im ersten Spektrum als Prüfstrukturen ausgewählt werden und die Prüfstrukturen im zweiten Spektrum ermittelt werden,
wobei die Wellenlängenverschiebung zwischen dem ersten Spektrum und dem zweiten Spektrum anhand eines Vergleichs der Prüfstrukturen des ersten Spektrums und des zweiten Spektrums ermittelt wird.

11. Verfahren nach Anspruch 10,
wobei das erste Spektrum in mehrere Teilbereiche aufgeteilt wird und in mehreren Teilbereichen eine spektrale Struktur als Prüfstruktur ausgewählt wird.

12. Verfahren nach Anspruch 1,
wobei der Vergleich des ersten Spektrums und des zweiten Spektrums anhand einer Autokorrelation der beiden Spektren erfolgt.

13. Verfahren nach Anspruch 12,
wobei im ersten Spektrum und im zweiten Spektrum jeweils ein Teilbereich ausgewählt wird, wobei der Vergleich des ersten Spektrums und des zweiten Spektrums anhand einer Autokorrelation der beiden Teilbereiche des ersten Spektrums und des zweiten Spektrums erfolgt.

14. Verfahren nach einem der Ansprüche 1-13,
wobei das Verfahren die weiteren Schritte umfasst:
- Aufnehmen eines dritten Spektrums,
- Ermitteln einer Wellenlängenverschiebung zwischen dem ersten Spektrum und dem dritten Spektrum anhand eines Vergleichs des ersten Spektrums und des dritten Spektrums, oder Ermitteln einer Wellenlängenverschiebung zwischen dem zweiten Spektrum und dem dritten Spektrum anhand eines Vergleichs des zweiten Spektrums und des dritten Spektrums,
- Erstellen einer dritten Wellenlängenzuordnung, wobei den Pixeln im dritten Spektrum anhand der ermittelten Wellenlängenverschiebung zwischen dem zweiten Spektrum und dem dritten Spektrum oder anhand der ermittelten Wellenlängenverschiebung zwischen dem ersten Spektrum und dem dritten Spektrum Wellenlängen zugeordnet werden.

15. Verfahren nach einem der Ansprüche 1-14,
wobei ein Referenzspektrum aufgenommen wird, wobei anhand des Referenzspektrums die erste Wellenlängenzuordnung erstellt wird.
